# FASCICULE DE BREVET EUROPEEN

(11) **EP 2 951 421 B1**
(45) Date de publication et mention de la délivrance du brevet: **08.03.2017**
(21) Numéro de dépôt: 14704845.8
(22) Date de dépôt: 23.01.2014
(51) Int. Cl.: F02C 7/228, F02C 9/34, F23R 3/34

(54) **ENSEMBLE DE COMBUSTION DE TURBOMACHINE COMPRENANT UN CIRCUIT D'ALIMENTATION DE CARBURANT AMÉLIORÉ**
TURBOMASCHINENVERBRENNUNGSANLAGE MIT VERBESSERTEM BRENNSTOFFZUFUHRKREISLAUF
TURBOMACHINE COMBUSTION ASSEMBLY COMPRISING AN IMPROVED FUEL SUPPLY CIRCUIT

(30) Priorité: 29.01.2013 FR 1350731
(43) Date de publication de la demande: 09.12.2015
(73) Titulaire: Safran Helicopter Engines, 64510 Bordes (FR)
(72) Inventeur: BADET, Jean-Pierre, F-64400 Precilhon (FR); VERDIER, Hubert, Pascal, F-64800 Nay (FR)
(74) Mandataire: Regimbeau
(86) Numéro de dépôt international: PCT/FR2014/050133
(87) Numéro de publication internationale: WO 2014/118457

(56) Documents cités:
- EP-A1- 1 475 569
- EP-A2- 2 503 131
- FR-A1- 2 922 995
- FR-A1- 2 971 039
- US-A- 3 088 279
- US-A- 5 881 550

## Description

### DOMAINE DE L'INVENTION

L'invention concerne de manière générale le domaine des turbomachines, et plus particulièrement le domaine des ensembles de combustion de turbomachines, comprenant une chambre de combustion et une pluralité d'injecteurs dédiés au démarrage et à l'alimentation en carburant de la chambre de combustion.

### ETAT DE LA TECHNIQUE

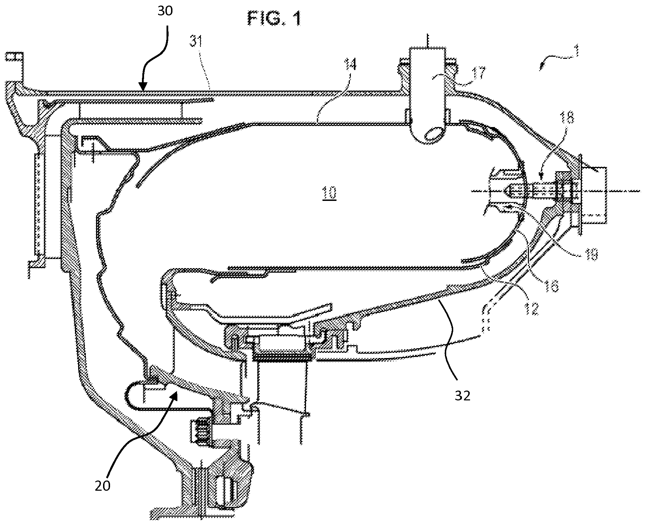

En référence à la figure 1, les turbomachines 1 comportent classiquement une chambre de combustion 10 et un distributeur 20 logés dans un carter 30, la chambre de combustion étant délimitée par des parois de révolution externe 14 et interne 12 s'étendant l'une à l'intérieur de l'autre et étant reliées par une paroi annulaire 16 de fond de chambre.

Le carter présente également une paroi interne 32 et une paroi externe 31 auxquelles sont respectivement fixées les parois interne 12 et externe 14 de la chambre de combustion.

Un mélange d'air et de carburant est injecté dans la chambre de combustion par une pluralité d'injecteurs, ce mélange étant enflammé pour générer l'énergie nécessaire à la propulsion de la turbomachine.

Plusieurs types d'injecteurs sont disposés dans une chambre de combustion, parmi lesquels les injecteurs de démarrage 17, faisant partie du système d'allumage qui comprend au moins une bougie ; ce système d'allumage permet d'enflammer le mélange air carburant, d'initier la combustion et de la propager aux injecteurs principaux. Les injecteurs de démarrage pénètrent généralement dans la chambre de combustion au travers d'un orifice pratiqué dans la paroi externe de la chambre de combustion.

Pour caractériser les injecteurs on utilise une grandeur appelée Flow Number (FN) égale au débit en L/h de l'injecteur divisé par la racine carrée de la différence de pression en bars du mélange injecté entre sa pression à l'entrée et en sortie de l'injecteur.

Le Flow Number des injecteurs de démarrage est inférieur au Flow Number des injecteurs principaux pour une turbomachine donnée. Le Flow Number d'un injecteur principal d'une machine est typiquement de 3 à 10 fois le Flow Nomber d'un injecteur de démarrage de la même machine.

Le Flow Number d'un injecteur de démarrage est typiquement compris entre 1 et 4, de préférence entre 1,5 et 2, tandis que celui d'un injecteur principal est typiquement supérieur à 4, par exemple compris entre 5 et 15, avantageusement entre 7 et 12.

Cette différence de Flow Number résulte d'une différence de fonctionnalité des injecteurs : l'initiation de la combustion dans la chambre par les injecteurs de démarrage nécessite une faible quantité de carburant, tandis que la poursuite par les injecteurs principaux de la combustion au sein de la chambre pour conférer sa puissance à la turbomachine nécessite un débit beaucoup plus important. Evidemment les valeurs de FN des injecteurs principaux ou des injecteurs de démarrage dépendent de la puissance et du cycle thermodynamique du moteur.

Dans les chambres dites « à cannes », chaque injecteur principal débouche dans une canne de prévaporisation 19, qui comporte un conduit muni de deux orifices d'échappement débouchant dans la chambre de combustion.

En fonctionnement, les injecteurs de démarrage initient la combustion en enflammant le carburant grâce à une bougie, et chauffent ainsi les cannes de prévaporisation.

Puis, les injecteurs principaux sont alimentés pour poursuivre la combustion dans la chambre en projetant du carburant à l'intérieur des cannes. Pendant cette étape, l'alimentation des injecteurs de démarrage cesse et ceux-ci sont purgés pour éviter une cokéfaction qui pourrait entraîner leur colmatage.

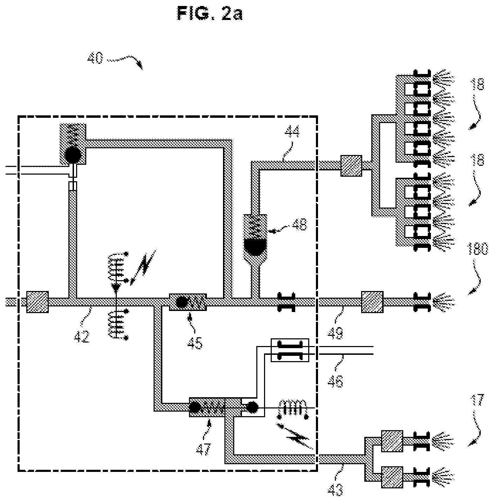

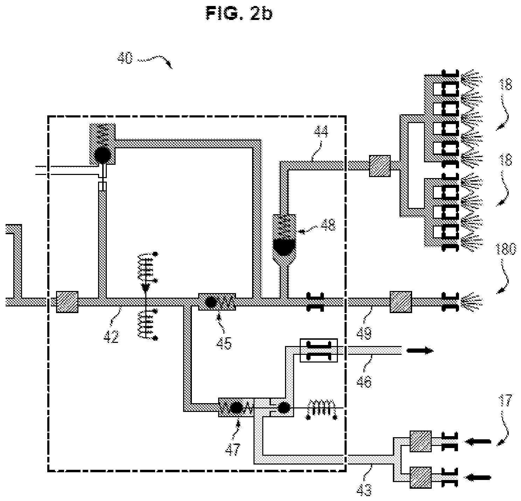

On a représenté en figures 2a et 2b le circuit d'alimentation de carburant permettant la mise en oeuvre de ce cycle de combustion, respectivement en phase d'allumage de la chambre, lorsque les injecteurs de démarrage sont alimentés, et en phase de purge desdits injecteurs.

Le circuit d'alimentation de carburant 40 comprend un conduit d'alimentation des injecteurs de démarrage 43, un conduit d'alimentation 44 des injecteurs principaux 18, et un conduit de distribution de carburant 42, en communication de fluide avec les conduits d'alimentation et adapté pour les alimenter en carburant.

Ce circuit présente en outre un circuit de purge 46 vers l'atmosphère des injecteurs de démarrage, actionné par un électro-clapet 47 de démarrage fermant, lorsqu'il est actionné comme sur la figure 2b, la communication de fluide entre le conduit de distribution 42 et le conduit d'alimentation 43 des injecteurs de démarrage.

Le circuit d'alimentation 40 comprend également un clapet de niveau 45, adapté pour fermer la communication de fluide entre le conduit d'alimentation des injecteurs principaux 44 et le reste du circuit lorsque la pression dans le conduit de distribution de carburant, en aval de sa connexion avec le conduit d'alimentation des injecteurs de démarrage, est inférieure à un seuil prédéterminé. Ainsi, ce clapet 45 s'ouvre suite à une augmentation de la pression dans le circuit de distribution consécutive à l'augmentation du débit carburant injecté dans la chambre de combustion après avoir réalisé l'allumage pour augmenter le régime moteur.

Enfin, la chambre de combustion comprend une fonction anti-extinction en cas de diminution brusque de régime, pour éviter de devoir rallumer la chambre de combustion en régime post-démarrage de la turbomachine.

Cette fonction anti-extinction est assurée par l'utilisation d'un injecteur principal privilégié 180, qui est l'injecteur majoritairement alimenté si la pression de carburant dans le circuit d'alimentation est trop faible. Pour ce faire, un clapet de distribution 48 est prévu entre le conduit d'alimentation 49 de l'injecteur privilégié et le conduit d'alimentation 44 des autres injecteurs pour fermer la communication de fluide avec ce conduit en cas de diminution du débit.

Le circuit d'alimentation est donc un assemblage complexe qui présente un coût de production élevé du fait du grand nombre de pièces qu'il comporte.

Les documents EP1475569, FR2971039, US5881550 et FR2922995 présentent des ensembles de combustion de turbomachine selon l'art antérieur.

### PRESENTATION DE L'INVENTION

L'invention a pour but de résoudre le problème mentionné ci-avant, en proposant un ensemble de combustion de turbomachine comprenant un circuit d'alimentation en carburant simplifié.

A cet égard, l'invention propose un ensemble de combustion de turbomachine, selon la revendication 1, comprenant:
- une chambre de combustion,
- au moins un injecteur de démarrage, adapté pour initier la combustion dans la chambre,
- une pluralité d'injecteurs principaux répartis à intervalle angulaire constant sur la circonférence de la chambre de combustion, adaptés pour alimenter en carburant la chambre de combustion lorsque la combustion est initiée, et
- un circuit d'alimentation en carburant des injecteurs,
dans lequel la chambre de combustion est délimitée par deux parois de révolution externe et interne s'étendant l'une à l'intérieur de l'autre et étant reliées par une paroi annulaire de fond de chambre, l'ensemble de combustion étant caractérisé en ce que le circuit d'alimentation en carburant est adapté pour alimenter au moins un injecteur de démarrage en continu, de telle sorte que ledit injecteur soit alimenté en carburant tant au cours de l'initiation de la combustion que lors de l'alimentation de la chambre lorsque la combustion est initiée,
en ce que chaque injecteur de démarrage alimenté en continu est orienté vers la paroi de fond de chambre et est dimensionné pour diffuser un faisceau de carburant présentant une ouverture angulaire dans une première direction comprise entre 120° et 180°, et
en ce que le débit de carburant injecté par les injecteurs principaux entre lesquels sont disposés les injecteurs de démarrage est réduit par rapport au débit injecté par les autres injecteurs principaux,
et en ce que chaque injecteur de démarrage est disposé entre deux injecteurs principaux consécutifs, à égale distance de ceux-ci.

Avantageusement, mais facultativement, l'ensemble de combustion selon l'invention peut en outre présenter au moins l'une des caractéristiques suivantes :
- le circuit d'alimentation est adapté pour alimenter en continu l'ensemble des injecteurs de démarrage.
- Le ratio du débit divisé par la racine carrée de la différence de pression du mélange carburant entre sa pression à l'entrée et en sortie de l'injecteur pour les injecteurs principaux entre lesquels sont disposés chaque injecteur de démarrage est inférieur audit ratio pour les autres injecteurs principaux.
- Chaque injecteur de démarrage alimenté en continu est dimensionné pour diffuser un faisceau présentant une ouverture angulaire comprise entre 15 et 35° dans une deuxième dimension orthogonale à la première direction.
- La chambre de combustion est du type chambre à injecteurs aérodynamiques ou aéromécaniques.
- La chambre est du type à cannes de prévaporisation, chaque canne de prévaporisation étant conformée pour que le carburant injecté par les injecteurs principaux soit dirigé vers la paroi de fond de chambre.
- La chambre de combustion comprend :
   o sur sa paroi interne, une pluralité d'orifices d'admission d'air, et
   o sur sa paroi externe, une pluralité d'orifices dits de dilution,
dans lequel le nombre et le diamètre desdits orifices sont adaptés pour répartir l'admission d'air dans la chambre de combustion et pour conserver l'homogénéité du champ de températures dans ladite chambre.
- La chambre de combustion est une chambre à flux inversé.
- Le circuit d'alimentation de carburant comprend :
   ∘ un conduit d'alimentation des injecteurs de démarrage,
   ∘ un conduit d'alimentation des injecteurs principaux, et
   ∘ un conduit de distribution de carburant, en communication de fluide avec les conduits d'alimentation et adapté pour alimenter lesdits conduits en carburant,
le circuit d'alimentation comprenant en outre un système de répartition adapté pour fermer la communication de fluide entre le conduit de distribution de carburant et le conduit d'alimentation des injecteurs principaux lorsque la pression de carburant dans le conduit de distribution est inférieure à un seuil prédéterminé.
- Le système de répartition est en outre adapté pour répartir le débit de carburant entre des injecteurs principaux présentant un débit réduit et les autres injecteurs principaux.

Grâce à l'alimentation continue des injecteurs de démarrage, le circuit d'alimentation en carburant n'a plus besoin de comprendre un circuit de purge.

De plus, le fait d'alimenter en carburant en continu les injecteurs de démarrage permet de maintenir la chambre allumée même en cas de réduction rapide du débit de carburant vers les injecteurs principaux - par exemple en cas de réduction du régime de la turbomachine. La fonction d'injecteur privilégié, et l'adaptation du circuit d'alimentation en carburant réalisée à cet effet, sont donc supprimées.

En outre, le fait d'adapter le faisceau de carburant diffusé par les injecteurs de démarrage et de réduire le débit des injecteurs principaux adjacents aux injecteurs de démarrage par rapport à celui des autres injecteurs principaux permet de préserver l'homogénéité du carburant dans la chambre de combustion, et donc de maintenir la durée de vie des pièces en aval de la chambre.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1, déjà décrite, représente une vue en coupe axiale d'une turbomachine de l'état de la technique.
- Les figures 2a et 2b, déjà décrites également, représentent un circuit d'alimentation en carburant des injecteurs d'une turbomachine de l'état de la technique, respectivement lors d'une phase d'alimentation des injecteurs de démarrage, et lors d'une phase de purge desdits injecteurs.
- La figure 3a représente une vue en coupe partielle d'une turbomachine comprenant une chambre de combustion du type à cannes de prévaporisation,
- La figure 3b représente une vue en coupe partielle d'une turbomachine comprenant une chambre de combustion à injecteurs aérodynamiques ou aéromécaniques,
- La figure 4 représente un circuit d'alimentation en carburant des injecteurs d'une turbomachine.
- La figure 5 représente une vue en coupe transversale d'une turbomachine,
- La figure 6 représente une vue en perspective partielle d'une chambre de combustion d'une turbomachine,

### DESCRIPTION DETAILLEE D'AU MOINS UN MODE DE REALISATION DE L'INVENTION

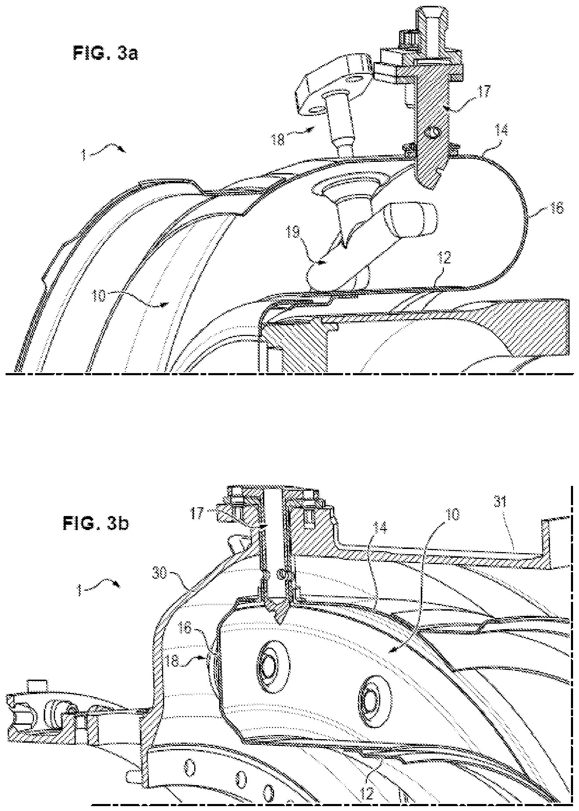

En référence aux figures 3a et 3b, on a représenté un ensemble de combustion de turbomachine 1, comprenant une chambre de combustion 10 et un carter 30 (représenté en figure 3b), la chambre de combustion 10 étant délimitée par deux parois de révolution externe 14 et interne 12 s'étendant l'une à l'intérieur de l'autre et étant reliées par une paroi annulaire de fond de chambre 16.

Le carter comprend également une paroi externe 31 (représentée sur la figure 3b) et une paroi interne (non représentée sur la figure 3b) auxquelles sont respectivement fixées les parois interne 12 et externe 14 de la chambre de combustion.

La turbomachine 1 comprend en outre une pluralité d'injecteurs de carburant, comprenant au moins un injecteur 17 de démarrage, de préférence au moins deux injecteurs 17 de démarrage, et une pluralité d'injecteurs 18 principaux, de préférence au moins trois injecteurs 18 principaux, par exemple 8 injecteurs principaux.

Le système d'allumage comprend au moins un injecteur de démarrage 17 et deux bougies (non représentées) adaptées pour enflammer le faisceau de carburant délivré par l'injecteur 17 et ainsi initier la combustion dans la chambre.

Selon un premier mode de réalisation de la turbomachine, représenté en figure 3a, la chambre de combustion est du type à cannes de prévaporisation, dans laquelle chaque injecteur principal 18 débouche dans une canne de prévaporisation 19, elle-même débouchant à l'intérieur de la chambre. Chaque canne de prévaporisation comprend un conduit débouchant par deux orifices dans la chambre de combustion.

Les cannes de prévaporisation 19 pénètrent à l'intérieur de la chambre de combustion au travers d'un orifice pratiqué dans la paroi externe 14 ou dans la paroi de fond de chambre 16 de la chambre de combustion 10, et présentent une section en T dont les extrémités sont recourbées vers la paroi de fond de chambre.

Selon un second mode de réalisation de la turbomachine, représenté en figure 3b, les injecteurs principaux 18 sont de type aérodynamique ou aéromécanique, et pénètrent directement à l'intérieur de la chambre 10 au travers d'un orifice pratiqué dans la paroi 16 de fond de chambre.

Avantageusement, la chambre de combustion est du type à flux inversé.

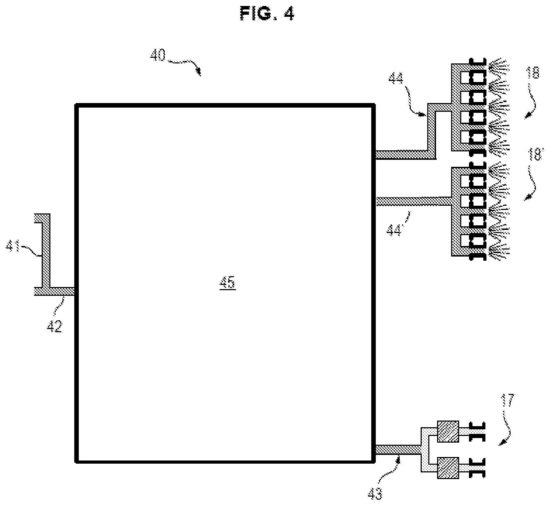

La turbomachine 1 comprend également un circuit d'alimentation 40 en carburant des injecteurs, ledit circuit étant représenté en figure 4.

Le circuit d'alimentation de carburant comprend une entrée d'injection 41 de carburant, par lequel le carburant pénètre dans le circuit dans un conduit 42 de distribution de carburant.

Le conduit de distribution de carburant est relié aux injecteurs de démarrage par un conduit d'alimentation 43 des injecteurs de démarrage, et aux injecteurs principaux par un conduit d'alimentation 44 des injecteurs principaux.

Le circuit d'alimentation de carburant est adapté pour alimenter en continu les injecteurs de démarrage, de sorte que lesdits injecteurs soient alimentés en carburant tant au cours d'une étape d'initiation de la combustion au cours de laquelle le carburant est enflammé par la bougie, qu'au cours de l'étape postérieure d'alimentation en carburant de la chambre, lorsque la combustion est déjà initiée.

Pour procéder à l'alimentation en continu des injecteurs de démarrage, le circuit comprend un système de répartition 45 adapté pour fermer la communication de fluide entre le conduit de distribution de carburant et le conduit d'alimentation des injecteurs principaux, par exemple lorsque la pression du carburant dans le conduit de distribution est inférieur à un seuil prédéterminé.

Ainsi, le carburant est de façon privilégiée dirigé vers les injecteurs de démarrage, et c'est seulement lors d'une augmentation de pression du carburant - par exemple consécutive à une augmentation de régime de la turbomachine - que les injecteurs principaux sont alimentés.

Du fait de l'alimentation en continu des injecteurs de démarrage, il n'est pas nécessaire de les purger. Le circuit de purge est donc supprimé et le circuit d'alimentation de carburant est simplifié.

En outre, la fonction d'injecteur privilégié est également supprimée du fait que les injecteurs de démarrage accomplissent cette fonction en étant alimentés en carburant en permanence : en cas de baisse de régime de la turbomachine, les injecteurs de démarrage restent alimentés en carburant et assument la fonction anti-extinction en poursuivant la combustion à l'intérieur de la chambre.

De ce fait, le clapet de distribution des injecteurs permettant de privilégier un injecteur principal est supprimé, et le circuit d'alimentation de carburant est encore simplifié, et rendu moins coûteux à fabriquer.

La structure de la chambre de combustion et le positionnement des injecteurs doit être adaptée pour conserver une bonne homogénéité des champs de température dans la chambre et en sortie de la chambre.

Pour ce faire, de retour à la figure 3a, dans le cas où la chambre de combustion est du type chambre à cannes de prévaporisation, les injecteurs de démarrage 17 et les orifices de sortie des cannes de prévaporisation 19 sont orientés vers la paroi 16 de fond de chambre.

Alternativement, dans le cas d'une chambre de combustion avec injecteurs aérodynamiques ou aéromécaniques, comme illustré en figure 3b, les injecteurs de démarrage 17 sont orientés vers la paroi de fond de chambre.

De la sorte, le carburant est directement injecté dans le flux en mouvement du carburant en combustion appelé « recirculation ».

Ceci permet au carburant issu de l'injecteur de démarrage 17 d'augmenter son temps de séjour dans la zone primaire de la chambre de combustion, c'est-à-dire la zone où ont lieu évaporation et combustion. La combustion du carburant dans la zone primaire est donc quasi-complète, ce qui permet au carburant injecté par les injecteurs de démarrage de se comporter de façon similaire au carburant injecté par les cannes de prévaporisation, de sorte que l'utilisation continue desdits injecteurs n'a pas d'effet négatif sur le rendement global de combustion ni sur les émissions polluantes.

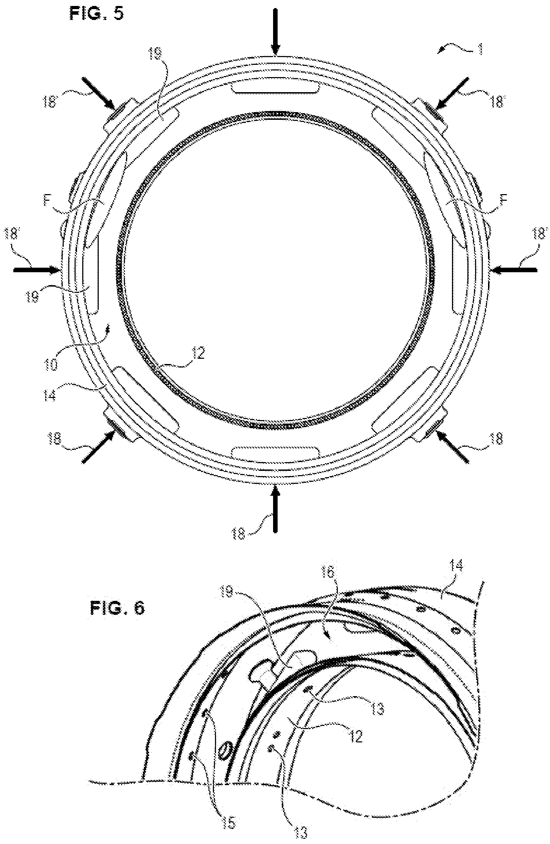

De plus, on utilise des injecteurs de démarrage de type « Flat Spray », c'est-à-dire du type dans lequel la section transversale du faisceau F (voir figure 5) présente une ouverture angulaire importante dans une première direction, comprise entre 120° et 180°, et une ouverture angulaire réduite dans une seconde direction, orthogonale à la première, comprise entre 15 et 35°.

Le faisceau des injecteurs de démarrage est orienté contre la paroi de fond de chambre de sorte que la seconde direction, correspondant à l'ouverture angulaire réduite, soit radiale autour de l'axe de la turbomachine, comme illustré en figure 5.

L'utilisation d'injecteurs de démarrage de type Flat Spray permet de répartir sur un secteur angulaire plus large l'apport ponctuel de carburant et ainsi d'obtenir un champ de température homogène dans la zone primaire de la chambre de combustion.

De plus, en référence à la figure 5, les injecteurs principaux 18 sont répartis régulièrement sur la circonférence de la chambre de combustion, c'est-à-dire avec un intervalle angulaire constant entre deux injecteurs principaux consécutifs.

Les injecteurs de démarrage sont disposés entre deux injecteurs principaux consécutifs et à égale distance de ceux-ci, de sorte que les orifices des cannes de prévaporisation 19 dans lesquels débouchent les injecteurs principaux soient disposés en regard des extrémités du faisceau des injecteurs de démarrage.

Afin d'éviter une sur-richesse locale en carburant dans la zone de combustion au voisinage des injecteurs de démarrage, c'est-à-dire un surcroît de débit local engendré par les injecteurs de démarrage alimentés en permanence, les injecteurs principaux 18' entre lesquels sont disposés les injecteurs de démarrage présentent un débit réduit par rapport au débit des autres injecteurs principaux 18.

Cette réduction de débit peut être obtenue en réduisant le Flow Number des injecteurs 18' par rapport à celui des injecteurs 18. Cela présente en effet l'avantage d'alimenter les injecteurs principaux 18 et 18' avec la même pression d'injection, ce qui permet de simplifier le circuit carburant en amont des injecteurs

A titre d'exemple non limitatif, l'ensemble des injecteurs principaux présente un Flow Number supérieur à 4, par exemple compris entre 5 et 15, avantageusement entre 7 et 12, mais avantageusement, le Flow Number réduit des injecteurs 18' est compris entre 6 et 8, de préférence égal à 7, et le Flow Number des autres injecteurs principaux est supérieur ou égal à 9. Le Flow Number des injecteurs de démarrage est quant à lui compris entre 1 et 4, de préférence entre 1,5 et 2. Bien entendu, le Flow Number des injecteurs dépend de paramètres variables tels que la taille de la turbomachine, le nombre d'injecteurs, ou encore le débit de carburant maximum. L'Homme du métier saura adapter la valeur du Flow Number des différents injecteurs utilisés en fonction de la turbomachine sur laquelle ces injecteurs sont installés.

Enfin, les valeurs de Flow Number doivent être adaptées pour minimiser, pour les régimes de forte puissance, l'écart de débit de carburant entre un secteur de chambre correspondant à une canne de prévaporisation et un secteur correspondant à une canne de prévaporisation et un injecteur de démarrage.

Par exemple, dans le cas où la turbomachine comprend huit injecteurs principaux, quatre d'entre eux peuvent présenter un Flow Number réduit.

De retour à la figure 5, dans le cas où le débit des injecteurs 18' est réduit par rapport à celui des autres injecteurs principaux 18, sans pour autant que le Flow Number ne soit réduit, le système de répartition 45 est également adapté pour répartir le débit de carburant entre les différents types d'injecteurs (c'est-à-dire distribuer un débit moindre aux injecteurs 18'). A cet égard il peut en outre comprendre un conduit d'alimentation 44' des injecteurs 18', avantageusement indépendant du conduit 44 d'alimentation des injecteurs 18 pour permettre que le carburant alimentant lesdits injecteurs 18' soit à une pression différente de celui alimentant les injecteurs 18..

En référence à la figure 6, on a représenté une chambre de combustion en vue en perspective partielle. La chambre comporte une zone primaire, s'étendant depuis la paroi de fond de chambre jusqu'à une position axiale correspondant à la position axiale d'orifices d'admission d'air 13 disposés sur la paroi interne 12 de la chambre de combustion 10 appelés «trous primaires », la position axiale étant mesurée parallèlement à l'axe de la turbomachine. Cette position axiale est par exemple disposée à environ 40 mm de la paroi de fond de chambre.

Les orifices d'admission d'air 15 sont répartis sur la circonférence de la chambre de combustion de sorte que, pour chaque canne de prévaporisation 19, deux orifices d'admission d'air soient en regard d'un orifice de la canne, et un orifice d'admission d'air soit en regard de l'autre orifice de la canne.

Une zone dite de dilution s'étend de la zone primaire à une position axiale correspondant à la position axiale d'orifices de dilution 15 disposés sur la paroi externe 14 de la chambre, cette position axiale se trouvant à environ 70 mm du fond de chambre 16.

Le nombre et le diamètre des orifices de dilution et/ou celui des orifices d'admission peuvent être adaptés afin d'adapter angulairement le débit d'admission d'air dans la chambre. Ceci permet de maitriser le champ de température dans la chambre de combustion, par exemple pour supprimer d'éventuels points chauds générés par l'augmentation ponctuelle de richesse en carburant due à l'alimentation en continu des injecteurs de démarrage. Cette adaptation permet de préserver la durée de vie des pièces de la turbomachine, notamment en aval de la chambre de combustion.

Par exemple, les orifices de dilution et orifices d'admission peuvent présenter un diamètre compris entre 4 et 7 mm, de préférence compris entre 5 et 6 mm. Ceci permet de supprimer d'éventuels points chauds dans la chambre de combustion, en aval de la zone primaire par rapport à la direction d'échappement du carburant, ce qui préserve la durée de vie des pièces de la turbomachine. Bien entendu, le nombre et la taille des orifices primaires et des orifices de dilution dépend de paramètres variables tels que la taille de la turbomachine, le nombre d'injecteurs, ou encore le débit d'air du moteur. L'Homme du métier saura adapter le nombre et la taille des orifices en fonction de la turbomachine sur laquelle la chambre de combustion est installée.

Ainsi, on a proposé une turbomachine dont le circuit d'alimentation en carburant est simplifié du fait de l'alimentation en continu des injecteurs de démarrage, sans dégrader la durée de vie des pièces de la turbomachine.

## Revendications

1. Ensemble de combustion de turbomachine (1), comprenant :
- une chambre de combustion (10),
- au moins un injecteur de démarrage (17), adapté pour initier la combustion dans la chambre,
- une pluralité d'injecteurs principaux (18) répartis à intervalle angulaire constant sur la circonférence de la chambre de combustion, adaptés pour alimenter en carburant la chambre de combustion lorsque la combustion est initiée, et
- un circuit d'alimentation (40) en carburant des injecteurs,
dans lequel la chambre de combustion (10) est délimitée par deux parois de révolution externe (14) et interne (12) s'étendant l'une à l'intérieur de l'autre et étant reliées par une paroi annulaire de fond de chambre (16),
l'ensemble de combustion étant **caractérisé en ce que** le circuit d'alimentation en carburant (40) est adapté pour alimenter au moins un injecteur de démarrage en continu, de telle sorte que ledit injecteur soit alimenté en carburant tant au cours de l'initiation de la combustion que lors de l'alimentation de la chambre lorsque la combustion est initiée,
**en ce que** chaque injecteur de démarrage (17) alimenté en continu est orienté vers la paroi de fond de chambre (16) et est dimensionné pour diffuser un faisceau (F) de carburant présentant une ouverture angulaire dans une première direction comprise entre 120° et 180°, et
**en ce que** le débit de carburant injecté par les injecteurs principaux (18') entre lesquels sont disposés les injecteurs de démarrage (17) est réduit par rapport au débit injecté par les autres injecteurs principaux (18), et **en ce que** chaque injecteur de démarrage (17) est disposé entre deux injecteurs principaux (18') consécutifs, à égale distance de ceux-ci.

2. Ensemble de combustion de turbomachine selon la revendication 1, dans lequel le circuit d'alimentation (40) est adapté pour alimenter en continu l'ensemble des injecteurs de démarrage (17).

3. Ensemble de combustion de turbomachine selon l'une des revendications 1 ou 2, dans lequel le ratio du débit divisé par la racine carrée de la différence de pression du mélange carburant entre sa pression à l'entrée et en sortie de l'injecteur pour les injecteurs principaux (18') entre lesquels sont disposés chaque injecteur de démarrage est inférieur audit ratio pour les autres injecteurs principaux (18).

4. Ensemble de combustion de turbomachine selon l'une des revendications précédentes, dans lequel chaque injecteur de démarrage (17) alimenté en continu est dimensionné pour diffuser un faisceau (F) présentant une ouverture angulaire comprise entre 15 et 35° dans une deuxième dimension orthogonale à la première direction.

5. Ensemble de combustion selon l'une des revendications précédentes, dans lequel la chambre de combustion (10) est du type chambre à injecteurs aérodynamiques ou aéromécaniques.

6. Ensemble de combustion selon l'une des revendications 1 à 4, dans lequel la chambre est du type à cannes de prévaporisation (19), chaque canne de prévaporisation (19) étant conformée pour que le carburant injecté par les injecteurs principaux (18,18') soit dirigé vers la paroi de fond de chambre (16).

7. Ensemble de combustion de turbomachine selon l'une des revendications précédentes, dans lequel la chambre de combustion (10) comprend :
- sur sa paroi interne (12), une pluralité d'orifices d'admission d'air (13), et
- sur sa paroi externe (14), une pluralité d'orifices (15) dits de dilution,
dans lequel le nombre et le diamètre desdits orifices est adapté pour répartir l'admission d'air dans la chambre de combustion et pour conserver l'homogénéité du champ de températures dans ladite chambre.

8. Ensemble de combustion de turbomachine selon l'une des revendications précédentes, dans lequel la chambre de combustion est une chambre à flux inversé.

9. Ensemble de combustion de turbomachine selon l'une des revendications précédentes, dans lequel le circuit d'alimentation de carburant (40) comprend :
- un conduit d'alimentation (43) des injecteurs de démarrage,
- un conduit d'alimentation (44) des injecteurs principaux, et
- un conduit de distribution (42) de carburant, en communication de fluide avec les conduits d'alimentation et adapté pour alimenter lesdits conduits en carburant,
le circuit d'alimentation comprenant en outre un système de répartition (45) adapté pour fermer la communication de fluide entre le conduit de distribution de carburant (42) et le conduit d'alimentation (44) des injecteurs principaux lorsque la pression de carburant dans le conduit de distribution (42) est inférieure à un seuil prédéterminé.

10. Ensemble de combustion selon la revendication 9, dans lequel le système de répartition (45) est en outre adapté pour répartir le débit de carburant entre des injecteurs principaux (18') présentant un débit réduit et les autres injecteurs principaux (18).

11. Turbomachine (1) comprenant un ensemble de combustion selon l'une des revendications précédentes.

## Patentansprüche

1. Verbrennungseinheit für Turbomaschinen (1), umfassend:
- eine Brennkammer (10),
- zumindest eine Anlass-Einspritzdüse (17), die dazu geeignet ist, die Verbrennung in der Kammer auszulösen,
- mehrere Haupteinspritzdüsen (18), die in konstantem Winkelabstand auf dem Umfang der Brennkammer verteilt sind, die dafür geeignet sind, die Brennkammer mit Kraftstoff zu versorgen, wenn die Verbrennung ausgelöst ist, und
- einen Kraftstoff-Versorgungskreis (40) zur Versorgung der Einspritzdüsen,
in dem die Brennkammer (10) durch zwei umlaufende Außen- (14) und Innenwände (12) abgegrenzt ist, wobei sich die eine im Inneren der anderen erstreckt und beide durch eine ringförmige Kammer-Rückwand (16) miteinander verbunden sind,
wobei die Verbrennungseinheit **dadurch gekennzeichnet ist, dass** der Kraftstoff-Versorgungskreis (40) dazu geeignet ist, derart zumindest eine Anlass-Einspritzdüse kontinuierlich zu versorgen, dass die Einspritzdüse sowohl während der Auslösung der Verbrennung als auch während der Kammerversorgung, wenn die Verbrennung ausgelöst ist, mit Kraftstoff versorgt wird,
dadurch, dass jede kontinuierlich versorgte Anlass-Einspritzdüse (17) zur Kammer-Rückwand (16) hin orientiert ist, und ausgelegt ist, um einen Kraftstoffstrahl (F) mit einer Winkelöffnung zwischen 120° und 180° in eine erste Richtung zu verteilen, und
dadurch, dass die von den Haupteinspritzdüsen (18'), zwischen denen die Anlass-Einspritzdüsen (17) angeordnet sind, eingespritzte Kraftstoffmenge gegenüber der von den anderen Haupteinspritzdüsen (18) eingespritzten Menge reduziert ist,
und dadurch, dass jede Anlass-Einspritzdüse (17) zwischen zwei aufeinander folgenden Haupteinspritzdüsen (18') im gleichen Abstand zu ihnen angeordnet ist.

2. Verbrennungseinheit für Turbomaschinen nach Anspruch 1, in der der Versorgungskreis (40) dazu geeignet ist, die Einheit der Anlass-Einspritzdüsen (17) kontinuierlich zu versorgen.

3. Verbrennungseinheit für Turbomaschinen nach einem der Ansprüche 1 oder 2, in der das Verhältnis der Menge geteilt durch die Quadratwurzel des Druckunterschieds der Kraftstoffmischung zwischen ihrem Druck am Eingang und am Ausgang der Einspritzdüse für die Haupteinspritzdüsen (18') zwischen denen jede Anlass-Einspritzdüse angeordnet ist, kleiner als das Verhältnis für die anderen Haupteinspritzdüsen (18) ist.

4. Verbrennungseinheit für Turbomaschinen nach einem der vorhergehenden Ansprüche, in der jede kontinuierlich versorgte Anlass-Einspritzdüse (17) ausgelegt ist, um einen Strahl (F) mit einer Winkelöffnung zwischen 15 und 35° in einer zweiten Dimension orthogonal zur ersten Richtung zu verteilen.

5. Verbrennungseinheit nach einem der vorhergehenden Ansprüche, in der die Brennkammer (10) des Typs einer Kammer mit aerodynamischen oder aeromechanischen Einspritzdüsen ist.

6. Verbrennungseinheit nach einem der Ansprüche 1 bis 4, in der die Kammer des Typs mit Vorverdampfungsrohren (19) ist, wobei jedes Vorverdampfungsrohr (19) ausgestaltet ist, damit der von den Haupteinspritzdüsen (18,18') eingespritzte Kraftstoff zur Kammer-Rückwand (16) geleitet wird.

7. Verbrennungseinheit für Turbomaschinen nach einem der vorhergehenden Ansprüche, in der die Brennkammer (10) umfasst:
- auf ihrer Innenwand (12), mehrere Luftzufuhröffnungen (13), und
- auf ihrer Außenwand (14), mehrere so genannte Verdünnungsöffnungen (15),
bei der die Anzahl und der Durchmesser der Öffnungen dazu geeignet ist, die Luftzufuhr in der Brennkammer zu verteilen und die Homogenität des Temperaturfeldes in der Kammer aufrecht zu erhalten.

8. Verbrennungseinheit für Turbomaschinen nach einem der vorhergehenden Ansprüche, in der die Brennkammer eine Rückflusskammer ist.

9. Verbrennungseinheit für Turbomaschinen nach einem der vorhergehenden Ansprüche, in der der Kraftstoff-Versorgungskreis (40) umfasst:
- eine Versorgungsleitung (43) der Anlass-Einspritzdüsen,
- eine Versorgungsleitung (44) der Haupteinspritzdüsen, und
- eine Kraftstoff-Verteilungsleitung (42) in Fluidverbindung mit den Versorgungsleitungen, die dazu geeignet ist die Leitungen mit Kraftstoff zu versorgen,
wobei der Versorgungskreis des Weiteren ein Verteilersystem (45) umfasst, das dazu geeignet ist, die Fluidverbindung zwischen der Kraftstoff-Verteilungsleitung (42) und der Versorgungsleitung (44) der Haupteinspritzdüsen zu schließen, wenn der Kraftstoffdruck in der Verteilungsleitung (42) niedriger als ein vorbestimmter Grenzwert ist.

10. Verbrennungseinheit nach Anspruch 9, in der das Verteilersystem (45) des Weiteren dazu geeignet ist, die Kraftstoffmenge zwischen den Haupteinspritzdüsen (18') mit reduziertem Durchsatz und den anderen Haupteinspritzdüsen (18) zu verteilen.

11. Turbomaschine (1) umfassend eine Verbrennungseinheit nach einem der vorhergehenden Ansprüche.

## Claims

1. A turbomachine combustion assembly (1), comprising:
- a combustion chamber (10),
- at least one starting injector (17), suitable for initiating combustion in the chamber,
- a plurality of main injectors (18) distributed at a constant angular interval around the circumference of the combustion chamber, designed to supply fuel to the combustion chamber when combustion has been initiated, and
- a fuel supply circuit (40) for the injectors,
wherein the combustion chamber (10) is delimited by two axisymmetric outer (14) and inner (12) walls extending one inside the other and which are connected by an annular chamber end wall (16),
the combustion assembly being **characterized in that** the fuel supply circuit (40) is designed to supply fuel to at least one starting injector continuously, so that said injector is supplied with fuel both throughout the initiation of the combustion and when fuel is supplied to the chamber when the combustion has been initiated,
**in that** each continuously-supplied starting injector (17) is oriented toward the chamber end wall (16) and is dimensioned to spread a spray (F) of fuel having an angular aperture in a first direction between 120° and 180°, and
**in that** the flow of fuel injected by the main injectors (18') between which the starting injectors (17) are positioned is reduced by comparison with the flow injected by the other main injectors (18),
and **in that** each starting injector (17) is positioned between two consecutive main injectors (18') at equal distance therefrom.

2. The turbomachine combustion assembly according to claim 1, wherein the supply circuit (40) is designed to supply all the starting injectors (17) continuously.

3. The turbomachine combustion assembly according to one of claims 1 or 2, wherein the ratio of the flow rate divided by the square root of the pressure difference of the fuel mixture between its pressure at the input and at the output of the injector for the main injectors (18') between which each starting injector is positioned is less than said ratio for the other main injectors (18).

4. The turbomachine combustion assembly according to one of the preceding claims, wherein each continuously-supplied starting injector (17) is dimensioned to spread a spray (F) having an angular aperture between 15 and 35° in a second dimension orthogonal to the first direction.

5. The combustion assembly according to one of the preceding claims, wherein the combustion chamber (10) is of the type having aerodynamic or aeromechanical injectors.

6. The combustion assembly according to one of claims 1 to 4, wherein the chamber is of the type comprising pre-evaporation rods (19), each pre-evaporation rod (19) being shaped so that the fuel injected by the main injectors (18, 18') is directed toward the chamber end wall (16).

7. The turbomachine combustion assembly according to one of the preceding claims, wherein the combustion chamber (10) comprises:
- on its inner wall (12), a plurality of air intake openings (13), and
- on its outer wall (14), a plurality of so-called dilution openings (15),
wherein the number and diameter of said openings are designed to distribute the air intake in the combustion chamber and to preserve the homogeneity of the temperature field in said chamber.

8. The turbomachine combustion assembly according to one of the preceding claims, wherein the combustion chamber is a reverse-flow chamber.

9. The turbomachine combustion assembly according to one of the preceding claims, wherein the fuel supply circuit (40) comprises:
- a supply duct (43) for the starting injectors,
- a supply duct (44) for the main injectors, and
- a fuel distribution duct (42), in fluid communication with the supply ducts and designed to supply fuel to said ducts,
the supply circuit further comprising a distribution system (45) designed to shut off fluid communication between the fuel distribution duct (42) and the supply duct (44) for the main injectors when the fuel pressure in the distribution duct (42) is less than a predetermined threshold.

10. The combustion assembly according to claim 9, wherein the distribution system (45) is further designed to distribute the fuel flow between main injectors (18') having a reduced flow rate and the other main injectors (18).

11. A turbomachine (1) comprising a combustion assembly according to one of the preceding claims.
